Europäisches Patentamt

European Patent Office

Office européen des brevets

(19)

(11) **EP 1 638 163 A1**

(12) **EUROPEAN PATENT APPLICATION**
published in accordance with Art. 158(3) EPC

(43) Date of publication:
22.03.2006 Bulletin 2006/12

(51) Int Cl.:
*H01Q 1/24* (1968.09)

(21) Application number: 03705149.7

(22) Date of filing: 14.02.2003

(86) International application number:
**PCT/JP2003/001537**

(87) International publication number:
**WO 2004/073108 (26.08.2004 Gazette 2004/35)**

(71) Applicant: Toshiba Carrier Corporation
Tokyo 105-8001 (JP)

(72) Inventor: HIROTA, Toshiyuki
Hino-shi, Tokyo 191-0054 (JP)

(74) Representative: Garkisch, Marcus
Patentanwälte
Henkel, Feiler, Hänzel & Partner
Möhlstrasse 37
81675 München (DE)

(54) **ELECTRONIC DEVICE**

(57) A PC 1 includes a plurality of radio modules (10a, 10b, 10c, ...) different in a frequency band from one another, an antenna (7) common to these, and a dielectric material (8) movably disposed on one plane side of the antenna (7). An interval between the antenna (7) and dielectric material (8) is set to be adjustable for each of the respective radio modules (10a, 10b, 10c, ...), and thereby a resonance frequency of the antenna (7) is switched.

FIG. 1

EP 1 638 163 A1

## Description

Technical Field

The present invention relates to an electronic apparatus including an antenna for radio communication.

Background Art

In recent years, for electronic apparatuses such as a personal computer, apparatuses including radio communication systems such as a radio LAN and Bluetooth (R) have spread. In this type of the radio communication system, radio waves, for example, of a 2.5 GHz or 5 GHz band are used. Moreover, as antennas for radio communication, various antennas such as a dipole antenna, helical antenna, slot antenna, and inverted F-shaped antenna are used for each type of the apparatus.

Additionally, a resonance frequency of the antenna is determined by shape, size, and peripheral environment of the antenna. Usually, a certain resonance frequency band is allocated to one antenna. Therefore, when a plurality of radio modules different in frequency band from one another are used, a plurality of antennas have to be installed for these respective radio modules, and a problem of installation space occurs.

To solve the problem, as described, for example, in Jpn. Pat. Appln. KOKAI Publication No. 2002-190708, a dual band antenna in which two resonance frequencies are imparted to one antenna, or a triple band antenna in which three resonance frequencies are imparted has heretofore been developed.

However, there is a limitation in the resonance frequency which can structurally be covered by one antenna, and with a predetermined number of (e.g., three) or more frequencies, there are disadvantages that the antenna size becomes very large and that the shape also becomes complicated. Furthermore, when a plurality of resonance frequencies are assigned to one antenna, there is a disadvantage that a usable band is narrowed.

Disclosure of Invention

An object of the present invention is to provide an electronic apparatus in which a resonance frequency of an antenna can appropriately be switched for each radio module without improving a shape of the antenna.

According to the present invention, there is provided an electronic apparatus comprising: a plurality of radio modules different in frequency band from one another; an antenna for use in common to the respective radio modules; a dielectric material disposed in the vicinity of the antenna; a movement mechanism to support the dielectric material so that the dielectric material can move with respect to the antenna; and switch means for adjusting an interval between the antenna and dielectric material by the movement mechanism to switch the resonance frequency of the antenna for each of the radio modules.

According to the electronic apparatus constituted in this manner, when the interval between the antenna and dielectric material is adjusted, the resonance frequency of the antenna can be switched for each of the respective radio modules.

Brief Description of Drawings

FIG. 1 is a perspective view showing an appearance constitution of a personal computer in a first embodiment of the present invention;
FIG. 2 is a diagram showing a constitution of an antenna for use in the personal computer;
FIG. 3 is a sectional side view showing a state in which the antenna is actually mounted;
FIG. 4 is an equivalent circuit showing a frequency characteristic of the antenna;
FIGS. 5A to 5C are diagrams showing one example of the resonance frequency of the antenna;
FIGS. 6A and 6B are diagrams showing a constitution example of a movement mechanism which moves a dielectric material in a vertical direction with respect to the antenna;
FIG. 7 is a diagram showing the constitution example of the movement mechanism which moves the dielectric material in a horizontal direction with respect to the antenna;
FIG. 8 is a diagram showing the constitution of the personal computer in a second embodiment of the present invention;
FIG. 9 is a flowchart showing a position control of the dielectric material by the personal computer; and
FIG. 10 is a diagram showing a constitution example of a case in which the dielectric materials are disposed in opposite planes of the antenna.

Best Mode for Carrying Out the Invention

Embodiments of the present invention will be described hereinafter with reference to the drawings.

(First Embodiment)

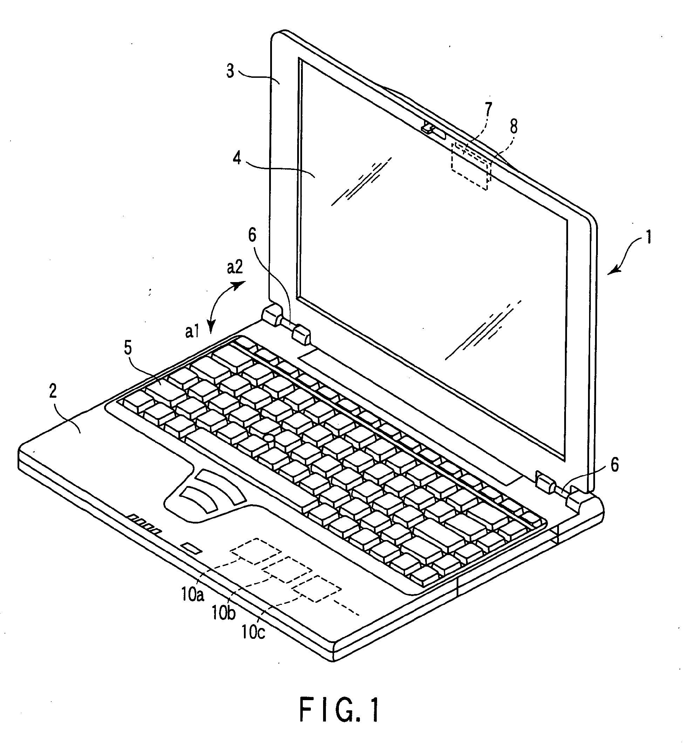

FIG. 1 is a perspective view showing an appearance constitution of an electronic apparatus in a first embodiment of the present invention. It is to be noted that here a portable personal computer (hereinafter abbreviated as PC) is described as an example of the electronic apparatus.

On a PC 1 which is the electronic apparatus of the present invention, a plurality of radio modules 10a, 10b, 10c, ... are mounted which are for use in radio communication and which are different in frequency band from one another. A user can selectively use one of these radio modules 10a, 10b, 10c, ... to perform the radio communication. It is to be noted that there are the following types of radio communications:

- IEEE802.11b: 2.4 GHz band;
- IEEE802.11a: 5 GHz band;
- Bluetooth (R): 2.4 GHz band;
- PDC: 800 MHz/1.5 GHz band;
- GSM: 900 MHz/1.8 GHz/1.9 GHz band;
- IS-136: 800 MHz/1.9 GHz; and
- CdmaOne(R): 800 MHz.

Among these, IEEE802.11b and IEEE802.11a are communication standards of the radio LAN determined by an "IEEE802.11" working group. Bluetooth(R) is the communication standard of a short-distance radio communication system. The PDC, GSM, IS-136, and CdmaOne(R) are the communication standards of a mobile radio communication system.

It is assumed that at least two radio modules (radio equipments) for realizing these radio communications are mounted on the PC 1.

The PC 1 includes a main body case 2, display portion case 3, LCD panel 4, and keyboard 5. The keyboard 5 is disposed in an upper surface portion of the main body case 2. The main body case 2 and the display case 3 are rotatably connected to each other via hinge portions 6. The display portion case 3 supports a peripheral portion of the LCD panel 4 so that a display region of the LCD panel 4 is brought in a visible state. The display portion case 3 can rotate in an arrow a1-a2 direction via the hinge portions 6. That is, this display portion case 3 can rotate between a closed position in which the keyboard 5 is covered and an opened position in which the keyboard 5 is brought into a usable state. The main body case 2 and display portion case 3 are formed by dielectric materials such as a synthetic resin.

Moreover, an antenna for radio communication 7 for use, for example, in the radio LAN (IEEE802.11b) is disposed in the display portion case 3. In the IEEE802.11b, a direct sequence spread spectrum (DSSS) is used which is one of the radio communication standards using an industry science medical (ISM) band of a 2.4 GHz band and which is a spread spectrum system, and communication is possible at a communication rate of 11 Mbps at maximum.

It is ideal to dispose the antenna 7 in a high position in order to improve a reception sensitivity. In the present embodiment, in consideration of situations in which the PC 1 is used, the antenna 7 of a flat plate type is disposed in an upper part of the display portion case 3, which corresponds to the high position at a use time. This antenna 7 is used in common to the respective radio modules 10a, 10b, 10c, ... mounted on the PC 1.

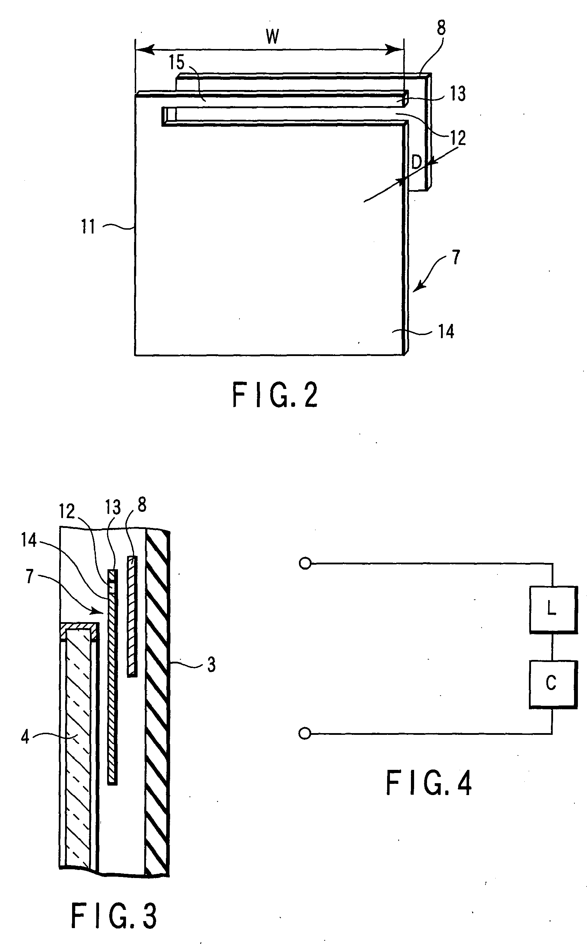

As the antenna 7, for example, an inverted F-shaped antenna shown in FIG. 2 is used. For this inverted F-shaped antenna 7, for example, a rectangular antenna substrate 11 is used, a groove 12 is disposed along an upper side of the substrate to form an element 13 which is a radio wave radiation element in the upper side of the antenna substrate 11, and another region is formed as a ground (GND) 14. Moreover, in the element 13, a power supply point 15 is disposed in a position near a base portion. In this case, the position of the power supply point 15 is set so that an impedance in the point indicates, for example, 50 Ω.

For the antenna substrate 11, a metal plate having a thickness, for example, of about 0.1 mm is used, and the opposite surfaces of the substrate are laminate-treated and protected. A width W of the antenna substrate 11 is set substantially to a 1/4 wavelength ($\lambda$) of the wavelength ($\lambda$) of a desired frequency. A concrete size of the antenna substrate 11 is about 30 X 30 mm, for example, when radio waves of a 2.4 GHz band are used. Moreover, the groove 12 has a width of about 2 mm, and the element 13 has a width of about 1 mm.

Here, a rectangular dielectric material 8 formed, for example, by a synthetic resin is disposed so as to be movable in a vertical direction with respect to one plane side of the antenna 7. When an interval between the dielectric material 8 and antenna 7 is set to D, a resonance frequency of the antenna 7 is determined in accordance with the length of D.

FIG. 3 is a sectional side view showing a state in which the inverted F-shaped antenna 7 is actually mounted on the display portion case 3.

The antenna 7 is fixed to the upper portion of the display portion case 3 using adhesives. In this case, the antenna 7 is disposed while a side with the element 13 formed thereon is projected upwards from the upper end of the LCD panel 4 by a predetermined width (e.g., about 5 to 6 mm). This prevents transmission/reception of radio waves by the element 13 from being influenced by the LCD panel 4.

Moreover, the dielectric material 8 is disposed on one plane side of the antenna 7 so as to be movable by a movement mechanism described later. This dielectric material 8 has a size sufficient to include at least a radio wave radiation portion formed in the upper end of the antenna 7. Thereby, the radio wave radiation portion of the antenna 7 is easily influenced by the permittivity of the dielectric material 8.

Here, for example, when the dielectric material 8 is closely attached to the antenna 7, the resonance frequency of the antenna 7 moves to a low side by the frequency which depends on the permittivity of the dielectric material 8. On the other hand, when the dielectric material 8 is detached from the antenna 7, and the interval D between the antenna 7 and dielectric material 8 increases, a degree of the influence of the permittivity of the dielectric material 8 onto the antenna 7 drops. Therefore, the resonance frequency of the antenna 7 moves to a high side.

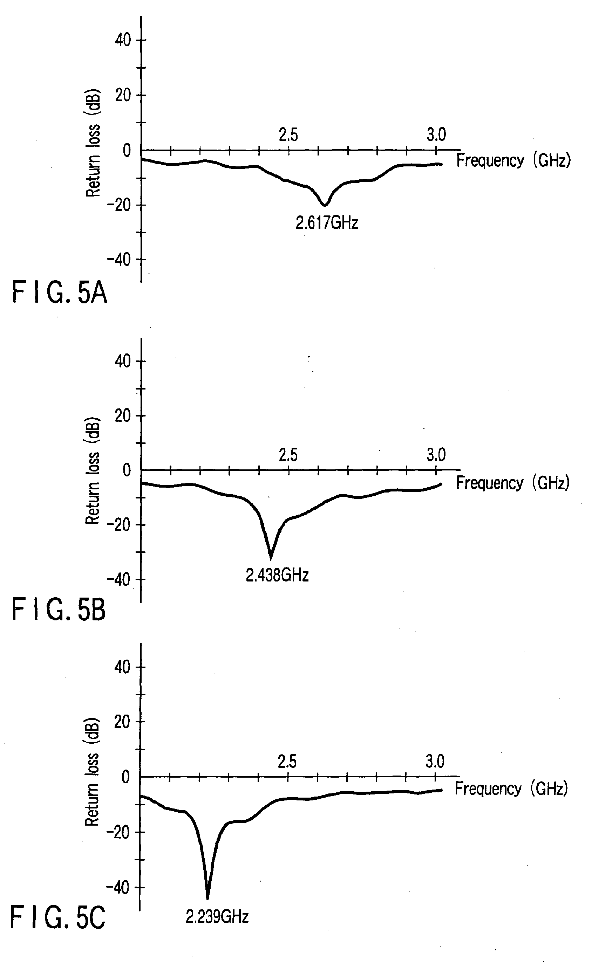

This state will be described with respect to FIGS. 4 and 5A to 5C.

FIG. 4 is an equivalent circuit showing a frequency characteristic of the antenna 7.

The antenna 7 can be represented by a series circuit of a coil L and capacitor C shown in FIG. 4. An inductance of the coil L is determined by the length of the element 13 of the antenna 7 and the position of the power supply point 15.

A resonance frequency $f_0$ of the antenna 7 is represented by:

$$f_0 = 1/(2\pi\sqrt{LC}) \qquad \ldots (1)$$

Moreover, the capacitor C is represented by:

$$C = \varepsilon_r\varepsilon_0 \ (S/d) \qquad \ldots (2)$$

Here, $\varepsilon_r$ denotes a non-permittivity, $\varepsilon_0$ denotes the permittivity in vacuum, d denotes a distance between polar plates of the capacitor, and S denotes a polar plate area.

Now, when the dielectric material 8 is brought close to the antenna 7, $\varepsilon_r$ of the above equation (2) increases. That is, when the interval D between the antenna 7 and dielectric material 8 is shortened, the non-permittivity $\varepsilon_r$ increases. With the increase of $\varepsilon_r$, the resonance frequency $f_0$ lowers by the above equation (1).

FIGS. 5A to 5C are diagrams showing one example of the resonance frequency of the antenna 7. FIG. 5A shows that a distance between the antenna 7 and dielectric material 8 is not less than a predetermined distance (distance in which the antenna 7 is not influenced by the dielectric material 8) (characteristics substantially of a single unit of the antenna 7). FIG. 5B shows that the interval D between the antenna 7 and dielectric material 8 is 1 mm. FIG. 5C shows that the interval D between the antenna 7 and dielectric material 8 is 0 mm (i.e., the dielectric material 8 is closely attached to the antenna 7). In FIGS. 5A to 5C, an abscissa indicates the frequency [GHz], and an ordinate indicates a return loss of the radio wave [dB]. A frequency band in which the return loss becomes minimum is the resonance frequency of the antenna 7 at this time.

As shown in FIG. 5A, the resonance frequency of the antenna 7 is 2.617 GHz in a case in which the frequency is not influenced by the dielectric material 8. On the other hand, with the influence of the dielectric material 8, the resonance frequency of the antenna 7 fluctuates in accordance with the interval D between the antenna 7 and dielectric material 8. That is, the shorter the interval D is, the lower the resonance frequency becomes. In this example, as shown in FIG. 5B, the frequency is 2.438 GHz with the interval D of 1 mm, and as shown in FIG. 5C, the frequency is 2.239 GHz with the interval D of 0 mm.

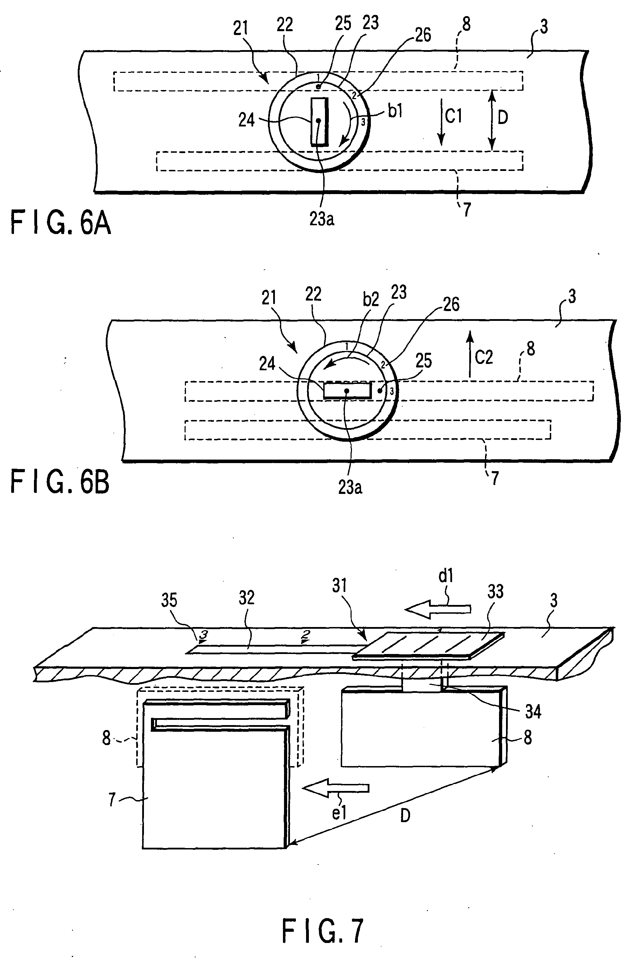

In this manner, the resonance frequency of the antenna 7 is determined in accordance with the interval D between the antenna 7 and dielectric material 8. The position of the dielectric material 8 is adjusted by a movement mechanism 21, for example, as shown in FIGS. 6A and 6B.

FIGS. 6A and 6B are diagrams showing a constitution example of the movement mechanism 21 which moves the dielectric material 8 in the vertical direction with respect to a plane of the antenna 7.

As shown in FIG. 6A, the movement mechanism 21 includes a circular graduated plate 22, a circular rotary plate 23 which rotates on the graduated plate 22, and a knob portion 24 disposed on the rotary plate 23. The graduated plate 22 is fixed to the upper end of the display portion case 3 by the adhesives. The rotary plate 23 rotates about a shaft 23a which is a support point. This rotary plate 23 is slidably attached to a center point 25 of the dielectric material 8. The knob portion 24 is used as an operation point for moving the dielectric material 8.

In this constitution, when a user operates the knob portion 24 with fingers to rotate the rotary plate 23 in an arrow b1 direction, the dielectric material 8 moves toward the antenna 7 in an arrow c1 direction. In this case, the dielectric material 8 is guided by a guide mechanism (not shown) disposed in the display portion case 3 to move keeping a parallel state with the antenna 7. The interval D between the antenna 7 and dielectric material 8 is narrowed by movement of the dielectric material 8 in the arrow c1 direction. Thereby, the resonance frequency band of the antenna 7 is adjusted toward a low side.

A plurality of graduations 26 are attached along a circumferential direction in an outer periphery of the graduated plate 22. These graduations 26 are adjusted to the frequency bands of the plurality of radio modules 10a, 10b, 10c, ... mounted on the PC 1. The user can use these graduations 26 as measures to easily perform a frequency adjustment operation. The rotary plate 23 includes a structure which is rotatable in stages for each of these graduations 26.

FIG. 6B shows that the rotary plate 23 has been rotated to a third graduation position. In this state, when the rotary plate 23 is rotated in an arrow b2 direction, the dielectric material 8 moves in an arrow c2 direction. Thereby, the resonance frequency band of the antenna 7 is adjusted toward a high side.

When the dielectric material 8 is moved with respect to the antenna 7 in this manner, the resonance frequency band of the antenna 7 can be switched. Therefore, all the frequency bands of the respective radio modules 10a, 10b, 10c, ... can be covered only with one antenna 7. In this case, the resonance frequency band of the antenna 7 is constituted to be appropriately switched by the movement of the dielectric material 8. Therefore, the shape of the antenna 7 is not complicated as compared with a structure in which a plurality of resonance frequency bands have heretofore been imparted to the antenna 7. Moreover, a usable band is not narrowed.

It is to be noted that in the examples of FIGS. 6A and 6B, the movement of the dielectric material 8 in three stages has been described, but it is also possible to move the material further finely.

Moreover, as shown in FIG. 7, even in a constitution in which the dielectric material 8 is moved in a horizontal direction with respect to the plane of the antenna 7, the resonance frequency band of the antenna 7 can be adjusted in the same manner as described above.

FIG. 7 shows the constitution example of a movement mechanism 31 which moves the dielectric material 8 in the horizontal direction with respect to the plane of the antenna 7.

The movement mechanism 31 includes a slide hole 32, an operation portion 33 fitted into the slide hole 32, and a support member 34 attached to the operation portion 33. The slide hole 32 is formed in a longitudinal direction with respect to the antenna 7 in the upper end of the display portion case 3. The operation portion 33 is slidably attached to the slide hole 32. The support member 34 extends from the bottom portion of the operation portion 33, and supports the dielectric material 8 via the slide hole 32.

In this constitution, when the user moves the operation portion 33 in an arrow d1 direction, the dielectric material 8 moves in an arrow e1 direction via the support member 34. Thereby, the interval D between the antenna 7 and dielectric material 8 is narrowed, and the resonance frequency band of the antenna 7 is adjusted toward the low side. Moreover, when the operation portion 33 is moved in a direction opposite to an arrow d1, the dielectric material 8 is detached from the antenna 7, and the resonance frequency band of the antenna 7 is adjusted toward the high side.

A plurality of graduations 35 are attached along the slide hole 32 in the vicinity of the slide hole 32. These graduations 35 are adjusted to the frequency bands of the plurality of radio modules 10a, 10b, 10c, ... mounted on the PC 1. The user can use these graduations 35 as the measures to easily perform the frequency adjustment operation. The operation portion 33 includes a structure which is slidable in stages for each of these graduations 35.

It is to be noted that in the example of FIG. 7, the movement of the dielectric material 8 in three stages has been described, but it is also possible to move the material further finely.

Even in the constitution in which the dielectric material 8 is moved in the horizontal direction with respect to the plane of the antenna 7 in this manner, the resonance frequency of the antenna 7 can be allowed to fluctuate in accordance with the position of the dielectric material 8. Therefore, all the frequency bands of the respective radio modules 10a, 10b, 10c, ... mounted on the PC 1 can be covered.

(Second Embodiment)

Next, a second embodiment of the present invention will be described.

The second embodiment is characterized in that the position of the dielectric material 8 is automatically adjusted.

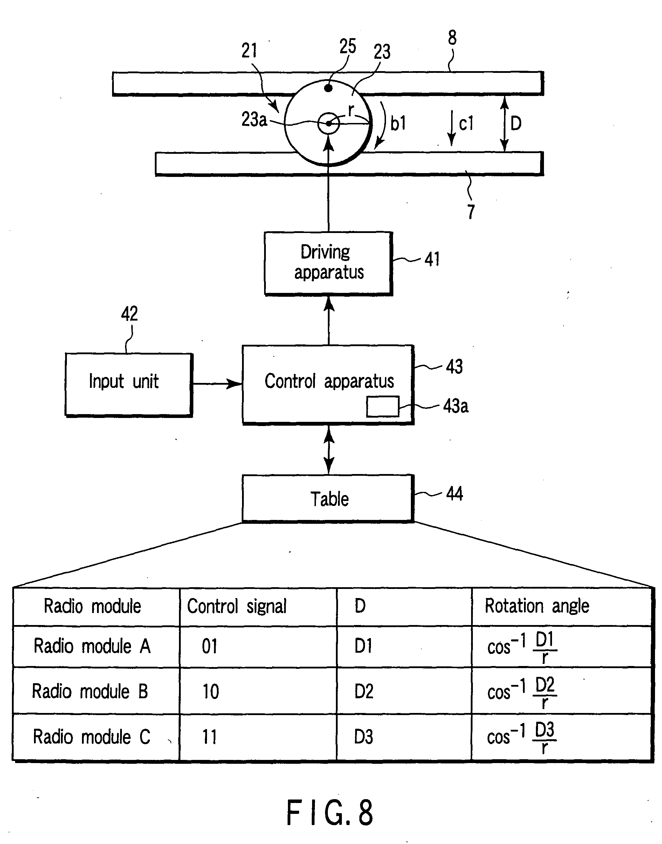

FIG. 8 is a diagram showing the constitution of the PC 1 in the second embodiment of the present invention. The dielectric material 8 is disposed to be movable with respect to the antenna 7 in the same manner as in the first embodiment. It is to be noted that here the movement mechanism 21 shown in FIGS. 6A and 6B is assumed and described as the movement mechanism of the dielectric material 8.

As shown in FIG. 8, the rotary plate 23 has a radius r, and rotates on the shaft 23a which is the support point.

The rotary plate 23 is slidably attached to the center point 25 of the dielectric material 8. When the rotary plate 23 rotates in the arrow b1 direction, the dielectric material 8 is guided by the guide mechanism (not shown) to move in parallel with the antenna 7 in the arrow c1 direction. Moreover, when the rotary plate 23 rotates in a direction opposite to the arrow b1, the dielectric material 8 moves in a direction opposite to the arrow c1.

Here, in the second embodiment, the PC 1 includes a driving apparatus 41, input unit 42, control apparatus 43, and table 44.

The driving apparatus 41 rotates/drives the rotary plate 23 based on a control signal outputted from the control apparatus 43. The input unit 42 is disposed to input a selection signal of the radio module, and concretely includes the keyboard 5 shown in FIG. 1. The control apparatus 43 includes a microprocessor. On receiving the selection signal of the radio module from the input unit 42, the apparatus refers to the table 44 to control the position of the dielectric material 8. In the table 44, a control signal S for each of the plurality of radio modules mounted on the PC 1 (including radio modules A, B, C here), the length of the interval D between the antenna 7 and dielectric material 8, and information indicating a rotation angle of the rotary plate 23 are set.

Next, an operation of the second embodiment will be described.

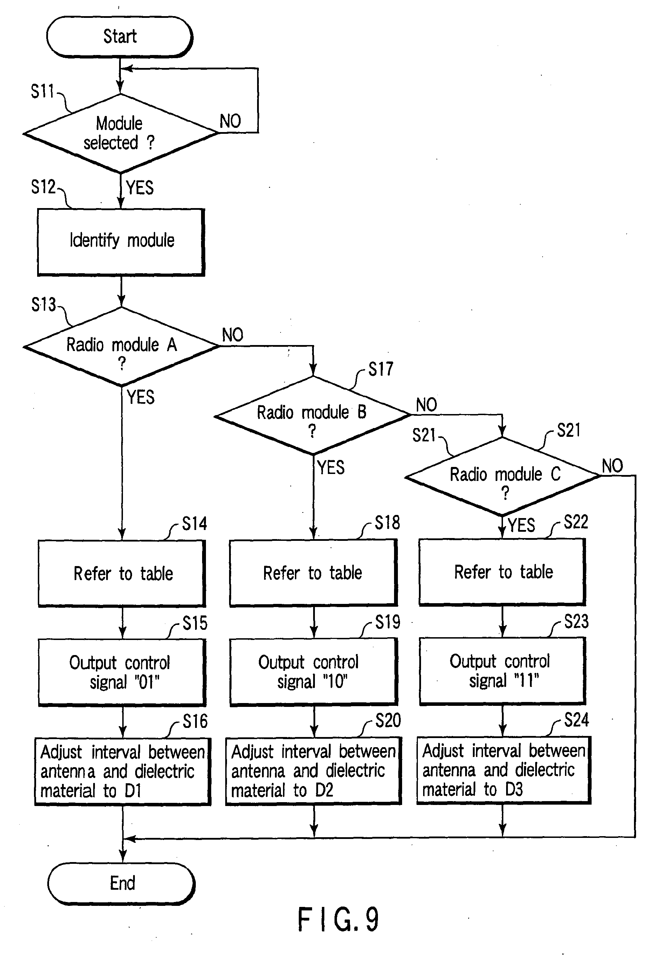

FIG. 9 is a flowchart showing a position control of the dielectric material 8 in the second embodiment. It is to be noted that the control apparatus 43 reads a program 43a to execute a process shown in the flowchart.

It is now assumed that three types of radio modules A, B, C different in frequency band from one another are mounted on the PC 1. The user can select any one from these radio modules A, B, C, for example, on a menu screen (not shown) to perform radio communication.

When the radio module for use in the radio communication is selected (YES in step S11), the selection signal (signal indicating the radio module selected by the user) is given to the control apparatus 43 through the input unit 42. Thereby, the control apparatus 43 first identifies the radio module brought in a use state based on the selection signal (step S12). It is to be noted that the use state of each radio module can also be judged from a starting state of an operating system (OS) or driver.

Here, when the radio module A is brought into the use state (YES in step S13), the control apparatus 43 refers to the table 44 to judge the position of the dielectric material 8 for the radio module A (step S14). In an example of the table 44 shown in FIG. 8, the position of the dielectric material 8 is D1 with respect to the radio module A, and a control signal for that is "01". Therefore, when the control apparatus 43 outputs the control signal "01" to the driving apparatus 41, the rotary plate 23 is rotated only by a predetermined angle (step S15), and the interval between the antenna 7 and dielectric material 8 is adjusted to D1 (step S16).

This also applies, when the radio module B or C is brought into the use state.

That is, with the radio module B (YES in step S17), the control apparatus 43 refers to the table 44 to output a control signal "10" to the driving apparatus 41, and thereby the interval between the antenna 7 and dielectric material 8 is adjusted to D2 (steps S18 to S20). Moreover, with the radio module C (YES in step S21), the control apparatus 43 refers to the table 44 to output a control signal "11" to the driving apparatus 41, and thereby the interval between the antenna 7 and dielectric material 8 is adjusted to D3 (steps S21 to S24).

The interval D between the antenna 7 and dielectric material 8 is automatically adjusted in accordance with the use state of each radio module in this manner. Therefore, unless the user performs the frequency adjustment operation as in the first embodiment, the resonance frequency of the antenna 7 can be switched for each of the respective radio modules.

It is to be noted that an example of a rotation mechanism has been described herein, but the present invention is not limited to this example, and it is also possible to apply a sliding mechanism which is slidable in the vertical direction with respect to the antenna plane.

Moreover, here the case in which the dielectric material 8 is moved in the vertical direction with respect to the antenna 7 has been assumed and described. However, the present invention can also be applied even in a case in which the movement mechanism 31 shown in FIG. 7 moves the dielectric material 8 in the horizontal direction with respect to the antenna 7.

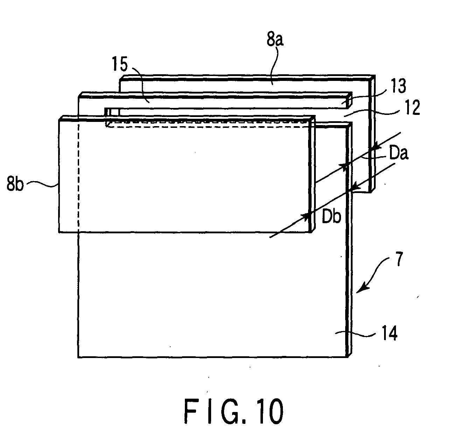

Furthermore, in the first and second embodiments, the dielectric material 8 is disposed only on one plane side of the antenna 7. However, as shown in FIG. 10, a constitution may also be used in which dielectric materials 8a, 8b are disposed on opposite plane sides of the antenna 7 and the dielectric materials 8a, 8b are supported by the movement mechanism 21 or 31 to be movable with respect to the antenna 7. In this constitution, the resonance frequency band of the antenna 7 is determined by an interval Da between the antenna 7 and dielectric material 8a and an interval Db between the antenna 7 and dielectric material 8b.

In this case, for example, if the intervals Da, Db of the dielectric materials 8a, 8b can be adjusted independently of each other, the switching of further more resonance frequencies can be realized.

Moreover, even when the intervals Da, Db can be adjusted in a linked manner, a relative permittivity increases with the use of two dielectric materials. Therefore, it is possible to enlarge an adjustment width of the resonance frequency, and the switching of further more resonance frequencies can be realized.

Furthermore, with application of automatic adjustment described in the second embodiment, information indicating the control signal for each of the respective radio modules and the intervals Da, Db between the antenna 7 and dielectric materials 8a, 8b are set in the table. Thereby, it is possible to adjust the resonance frequency of the antenna 7 in accordance with the use state of each radio module.

A process procedure at this time is similar to that of FIG. 9. That is, first, the control apparatus 43 identifies the radio module for use in the communication in the respective radio modules. Next, the control apparatus 43 obtains the position information of the dielectric materials 8a, 8b for the identified radio module from the table. Next, the control apparatus 43 drives/controls each movement mechanism to move the respective dielectric materials 8a, 8b to predetermined positions based on the position information of the dielectric materials 8a, 8b. Thereby, the resonance frequency of the antenna 7 is automatically adjusted.

Moreover, the inverted F-shaped antenna has been described as the example of the antenna 7, but the present invention is not limited to this. For example, other antennas such as a dipole antenna, helical antenna, and slot antenna may also be used.

Furthermore, the electronic apparatus of the present invention is not limited to the personal computer, and can be applied to all electronic apparatuses such as a cellular phone as long as the electronic apparatuses require the antenna for the radio communication.

Industrial Applicability

According to the present invention described above, an electronic apparatus can be obtained which can appropriately switch a resonance frequency of an antenna for each radio module without improving a shape of the antenna.

**Claims**

1. An electronic apparatus comprising:

   a plurality of radio modules different in frequency band from one another;
   an antenna for use in common to the respective radio modules;
   a dielectric material disposed in the vicinity of the antenna;
   a movement mechanism to support the dielectric material so that the dielectric material can move with respect to the antenna; and
   switch means for adjusting an interval between the antenna and dielectric material by the movement mechanism to switch the resonance frequency of the antenna for each of the radio modules.

2. The electronic apparatus according to claim 1, wherein the antenna comprises an antenna of a flat plate type, and the dielectric material is disposed on one plane side of the antenna.

3. The electronic apparatus according to claim 1, wherein the respective radio modules include a radio module which is for use in a radio LAN and which has a specific frequency band.

4. The electronic apparatus according to claim 1, wherein the movement mechanism supports the dielectric material so that the dielectric material can move in a vertical direction with respect to the antenna.

5. The electronic apparatus according to claim 2, wherein the movement mechanism supports the dielectric material so that the dielectric material can move in a vertical direction with respect to one plane of the antenna.

6. The electronic apparatus according to claim 5, further comprising:

   an operation portion which can adjust the position of the dielectric material supported by the movement mechanism by a manual operation.

7. The electronic apparatus according to claim 1, wherein the movement mechanism supports the dielectric material so that the dielectric material can move in a horizontal direction with respect to the antenna.

8. The electronic apparatus according to claim 2, wherein the movement mechanism supports the dielectric material so that the dielectric material can move in a horizontal direction with respect to one plane of the antenna.

9. The electronic apparatus according to claim 8, further comprising:

an operation portion which can adjust the position of the dielectric material supported by the movement mechanism by a manual operation.

10. The electronic apparatus according to claim 2, further comprising:

a second dielectric material disposed on the other plane side of the antenna separately from the dielectric material disposed on one plane side of the antenna,
wherein the movement mechanism supports the two dielectric materials so that the dielectric materials can move with respect to the antenna.

11. The electronic apparatus according to claim 1, further comprising:

control means for moving the dielectric material supported by the movement mechanism to a predetermined position in accordance with the use state of each radio module.

12. The electronic apparatus according to claim 11, wherein the control means comprises:

identification means for identifying the radio module for use in communication in the respective radio modules; and
driving control means for driving the movement mechanism based on the type of the radio module identified by the identification means to move the dielectric material to the predetermined position.

13. The electronic apparatus according to claim 12, further comprising:

table means in which information concerning an interval between the antenna and dielectric material is set for each of the respective radio modules,
wherein the driving control means refers to the table means to move the dielectric material to a position corresponding to the radio module.

14. The electronic apparatus according to claim 10, further comprising:

control means for moving the two dielectric materials supported by the movement mechanism to predetermined positions in accordance with use states of the respective radio modules.

15. The electronic apparatus according to claim 14, wherein the control means comprises:

identification means for identifying the radio module for use in communication in the respective radio modules; and
driving control means for driving the movement mechanism based on the type of the radio module identified by the identification means to move the two dielectric materials to the predetermined positions.

16. The electronic apparatus according to claim 15, further comprising:

table means in which information concerning intervals between the antenna and two dielectric materials is set for each of the respective radio modules,
wherein the driving control means refers to the table means to move the two dielectric materials to positions corresponding to the radio module.

FIG. 1

FIG. 2

FIG. 3

FIG. 4

FIG. 5A

FIG. 5B

FIG. 5C

FIG. 6A

FIG. 6B

FIG. 7

| Radio module | Control signal | D | Rotation angle |
|---|---|---|---|
| Radio module A | 01 | D1 | $\cos^{-1} \dfrac{D1}{r}$ |
| Radio module B | 10 | D2 | $\cos^{-1} \dfrac{D2}{r}$ |
| Radio module C | 11 | D3 | $\cos^{-1} \dfrac{D3}{r}$ |

FIG. 8

FIG. 9

FIG. 10

## INTERNATIONAL SEARCH REPORT

International application No.

PCT/JP03/01537

A. CLASSIFICATION OF SUBJECT MATTER
    Int.Cl⁷ H01Q1/24

According to International Patent Classification (IPC) or to both national classification and IPC

B. FIELDS SEARCHED

Minimum documentation searched (classification system followed by classification symbols)
    Int.Cl⁷ H01Q1/24, H01Q9/04

Documentation searched other than minimum documentation to the extent that such documents are included in the fields searched

| Jitsuyo Shinan Koho | 1922-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2002-232319 A (Fujitsu Ltd.), 16 August, 2002 (16.08.02), Page 6, right column, line 31 to page 7, left column, line 28; Figs. 5 to 6 (Family: none) | 1-16 |
| Y | JP 5-003409 A (Matsushita Electric Works, Ltd.), 08 January, 1993 (08.01.93), Full text; all drawings (Family: none) | 1-6,10-16 |
| Y | JP 11-136023 A (NEC Corp.), 21 May, 1999 (21.05.99), Full text; all drawings (Family: none) | 1-3,7-9, 11-16 |

| ☒ | Further documents are listed in the continuation of Box C. | ☐ | See patent family annex. |

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| 17 March, 2003 (17.03.03) | 01 April, 2003 (01.04.03) |

| Name and mailing address of the ISA/ | Authorized officer |
| Japanese Patent Office | |
| Facsimile No. | Telephone No. |

Form PCT/ISA/210 (second sheet) (July 1998)

## INTERNATIONAL SEARCH REPORT

| International application No. |
| --- |
| PCT/JP03/01537 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 9-069717 A (Murata Mfg. Co., Ltd.), 11 March, 1997 (11.03.97), Full text; Figs. 1 to 2 (Family: none) | 1 |
| A | JP 2001-345626 A (Mitsumi Electric Co., Ltd.), 14 December, 2001 (14.12.01), Full text; all drawings (Family: none) | 7-9 |
| A | JP 9-162632 A (Fujitsu Ltd.), 20 June, 1997 (20.06.97), Full text; all drawings (Family: none) | 4-6 |
| A | JP 4-330806 A (Fujitsu Ltd., The Furukawa Electric Co., Ltd.), 18 November, 1992 (18.11.92), Full text; all drawings (Family: none) | 7-9 |
| A | JP 2003-037416 A (Toshiba Corp.), 07 February, 2003 (07.02.03), Full text; all drawings (Family: none) | 1-16 |

Form PCT/ISA/210 (continuation of second sheet) (July 1998)